# EUROPÄISCHE PATENTSCHRIFT

(11) **EP 3 600 880 B1**
(45) Veröffentlichungstag und Bekanntmachung des Hinweises auf die Patenterteilung: **27.01.2021**
(21) Anmeldenummer: 18708448.8
(22) Anmeldetag: 12.03.2018
(51) Int. Cl.: B32B 15/088, B32B 15/18, B32B 15/20, B32B 27/20, B32B 27/34, C08G 69/14

(54) **LAMINATE ENTHALTEND EIN METALL UND EINE POLYAMIDZUSAMMENSETZUNG**
LAMINATES COMPRISING A METAL AND A POLYAMIDE COMPOSITION
STRATIFIÉ CONTENANT UN MÉTAL ET UNE COMPOSITION DE POLYAMIDE

(30) Priorität: 20.03.2017 EP 17161830
(43) Veröffentlichungstag der Anmeldung: 05.02.2020
(73) Patentinhaber: BASF SE, 67056 Ludwigshafen (DE)
(72) Erfinder: DESBOIS, Philippe, 67056 Ludwigshafen (DE); WUENSCH, Josef R, 67056 Ludwigshafen (DE)
(74) Vertreter: BASF IP Association
(86) Internationale Anmeldenummer: PCT/EP2018/056073
(87) Internationale Veröffentlichungsnummer: WO 2018/172123

(56) Entgegenhaltungen:
- WO-A1-2005/014278
- WO-A1-2008/013640
- DE-A1-102011 084 519
- US-A- 4 601 941
- US-A1- 2011 200 816

## Beschreibung

Die vorliegende Erfindung betrifft ein Laminat umfassend mindestens eine erste Schicht mindestens eines ersten Metalls und mindestens eine weitere Schicht einer Polyamidzusammensetzung (PZ). Darüber hinaus betrifft die vorliegende Erfindung ein Verfahren zur Herstellung des erfindungsgemäßen Laminats.

Eine in der heutigen Zeit häufig gestellte Aufgabe ist die Bereitstellung neuer Materialien, insbesondere für den Flugzeugbau, den Automobilbau und den Bootsbau, die leichter sind als die bislang eingesetzten Materialien. Gleichzeitig sollen diese neuen Materialien dieselben mechanischen Eigenschaften, insbesondere Festigkeit, Steifigkeit und Stabilität, wie die bekannten Materialien aufweisen oder diesen sogar überlegen sein. Die neuen Materialien sollen darüber hinaus mit bekannten Verfahren umgeformt werden können, wie beispielsweise mittels Tiefziehen, Walzen, Biegen, Prägen oder Falzen.

Die WO 2005/014 278 beschreibt Laminate, die zwischen zwei äußeren Metallschichten eine klebende Polymerschicht enthalten. Diese Polymerschicht enthält ein Polyamid 6, Polyamid 6.6, Polyamid 11, Polyamid 12, Polyamid 4.6, Polyamid 6.10 oder Polyamid 6.12 und ein Copolymer aus Ethylen und einer ungesättigten Carbonsäure und/oder einem Carbonsäurederivat und einem reaktiven Copolymer.

Nachteilig bei den in der WO 2005/014 278 beschriebenen Laminaten ist, dass sie insbesondere nach Lagerung in feuchter Umgebung nur noch eine schlechte Zugfestigkeit aufweisen. Darüber hinaus weist die Polymerschicht häufig schwankende Haftungseigenschaften auf.

Die US 2011/0200816 beschreibt Laminate, die zwei Metallschichten und eine dazwischenliegende Polymerschicht umfassen. Die Polymerschicht enthält beispielsweise ein Polyamid 6/66-Copolymer.

Die DE 10 2011 084519 beschreibt Siegelschichten für Solarzellen, die eine erste Außenschicht, eine Mittelschicht und eine zweite Außenschicht umfassen. Die Schichten können Polyamide wie beispielsweise Polyamid 6 oder Polyamid 66 enthalten.

Auch die in US 2011/0200816 beschriebenen Laminate weisen insbesondere nach Lagerung in feuchter Umgebung nur schlechte Zugfestigkeiten auf oder werden durch Luftfeuchtigkeit sogar bis zur Unbenutzbarkeit zerstört.

Die der vorliegenden Erfindung zugrundeliegende Aufgabe besteht somit darin, ein Laminat sowie ein Verfahren zu dessen Herstellung bereitzustellen, welches die Nachteile der im Stand der Technik beschriebenen Laminate nicht oder nur in vermindertem Maße aufweist. Insbesondere soll das Laminat auch nach längerer Lagerung bei höheren Luftfeuchtigkeiten noch eine hohe Zugfestigkeit aufweisen.

Gelöst wird diese Aufgabe durch ein Laminat, umfassend mindestens eine erste Schicht mindestens eines ersten Metalls und mindestens eine weitere Schicht einer Polyamidzusammensetzung (PZ), wobei die Polyamidzusammensetzung (PZ) ein Copolyamid hergestellt durch Polymerisation der Komponenten
(A) Caprolactam,
(B) mindestens eine C₄-C₄₀-Disäure und
(C) mindestens ein C₄-C₂₀-Diamin,
enthält, wobei das Copolyamid eine Amidfunktionenkonzentration im Bereich von 3,5 bis 7 Amidgruppen / 1000 g/mol aufweist.

Es wurde überraschend gefunden, dass die erfindungsgemäßen Laminate sowohl direkt nach ihrer Herstellung als auch nach längerer Lagerung bei höheren Luftfeuchtigkeiten, zum Beispiel für 14 Tage bei 70 °C und 62 % relativer Luftfeuchtigkeit, gute Zugfestigkeiten aufweisen.

Nachfolgend wird die vorliegende Erfindung näher erläutert.

Erfindungsgemäß umfasst das Laminat mindestens eine erste Schicht mindestens eines ersten Metalls und mindestens eine weitere Schicht einer Polyamidzusammensetzung (PZ).

"Mindestens eine erste Schicht" bedeutet im Rahmen der vorliegenden Erfindung sowohl genau eine erste Schicht als auch zwei oder mehrere erste Schichten.

"Mindestens ein erstes Metall" bedeutet im Rahmen der vorliegenden Erfindung sowohl genau ein erstes Metall als auch eine Mischung aus zwei oder mehreren ersten Metallen.

"Mindestens eine weitere Schicht" bedeutet im Rahmen der vorliegenden Erfindung sowohl genau eine weitere Schicht als auch zwei oder mehrere weitere Schichten.

Bevorzugt umfasst das Laminat zusätzlich mindestens eine zweite Schicht mindestens eines zweiten Metalls, wobei die mindestens eine erste Schicht mindestens eines ersten Metalls mit der mindestens einer zweiten Schicht mindestens eines zweiten Metalls über die mindestens eine weitere Schicht der Polyamidzusammensetzung (PZ) verbunden ist. In einem solchen Laminat folgt also auf die mindestens eine erste Schicht mindesten eine weitere Schicht und auf diese wiederum mindestens eine zweite Schicht.

Ein solches Laminat, das mindestens eine erste Schicht, mindestens eine weitere Schicht und mindestens eine zweite Schicht umfasst, wird auch als Sandwichmaterial bezeichnet.

Gegenstand der vorliegenden Erfindung ist daher auch ein Laminat, bei dem das Laminat zusätzlich mindestens eine zweite Schicht mindestens eines zweiten Metalls umfasst und bei dem die mindestens eine erste Schicht mit der mindestens einen zweiten Schicht über die mindestens eine weitere Schicht verbunden ist.

Das mindestens eine erste Metall der mindestens einen ersten Schicht kann gleich oder verschieden von dem mindestens einen zweiten Metall der mindestens einen zweiten Schicht sein. Bevorzugt ist das mindestens eine erste Metall der mindestens einen ersten Schicht gleich dem mindestens einen zweiten Metall der mindestens einen zweiten Schicht.

Das Laminat umfasst mindestens eine erste Schicht mindestens eines ersten Metalls. Anders ausgedrückt umfasst das Laminat mindestens eine erste Schicht, die aus mindestens einem ersten Metall besteht.

Die mindestens eine erste Schicht mindestens eines ersten Metalls weist beispielsweise eine Dicke im Bereich von 0,1 bis 0,6 mm, bevorzugt im Bereich von 0,15 bis 0,4 mm und insbesondere bevorzugt im Bereich von 0,18 bis 0,3 mm auf. Gegenstand der vorliegenden Erfindung ist daher auch ein Laminat, bei dem die mindestens eine erste Schicht eine Dicke im Bereich von 0,1 bis 0,6 mm aufweist.

Bevorzugt umfasst das Laminat zusätzlich mindestens eine zweite Schicht mindestens eines zweiten Metalls. Anders ausgedrückt umfasst das Laminat bevorzugt zusätzlich mindestens eine zweite Schicht, die aus mindestens einem zweiten Metall besteht.

Die mindestens eine zweite Schicht mindestens eines zweiten Metalls weist beispielsweise eine Dicke im Bereich von 0,1 bis 0,6 mm, bevorzugt im Bereich von 0,15 bis 0,4 mm und insbesondere bevorzugt im Bereich von 0,18 bis 0,3 mm auf.

Gegenstand der vorliegenden Erfindung ist daher auch ein Laminat, bei dem das Laminat zusätzlich mindestens eine zweite Schicht mindestens eines zweiten Metalls umfasst, wobei die mindestens eine zweite Schicht eine Dicke im Bereich von 0,1 bis 0,6 mm aufweist.

Die Dicke der mindestens einen zweiten Schicht kann gleich oder verschieden von der Dicke der mindestens einen ersten Schicht sein. Bevorzugt ist die Dicke der mindestens einen zweiten Schicht gleich der Dicke der mindestens einen ersten Schicht.

Als das mindestens eine erste Metall der mindestens einen ersten Schicht eignen sich alle dem Fachmann bekannten Metalle und Metalllegierungen, die bei den Herstellungstemperaturen und den Gebrauchstemperaturen des Laminats fest sind. Bevorzugt ist das mindestens eine erste Metall der mindestens einen ersten Schicht ausgewählt aus der Gruppe bestehend aus Eisen, Aluminium, Kupfer, Nickel und Magnesium sowie Legierungen daraus. Besonders bevorzugt ist das mindestens eine erste Metall eine Legierung aus Eisen, insbesondere bevorzugt ist das mindestens eine erste Metall Stahl.

Gegenstand der vorliegenden Erfindung ist daher auch ein Laminat, bei dem das mindestens eine erste Metall der mindestens einen ersten Schicht ausgewählt ist aus der Gruppe bestehend aus Eisen, Aluminium, Kupfer, Nickel und Magnesium sowie Legierungen daraus.

Gegenstand der vorliegenden Erfindung ist daher auch ein Laminat, bei dem das mindestens eine erste Metall ausgewählt ist aus der Gruppe bestehend aus Eisen, Aluminium, Kupfer, Nickel und Magnesium sowie Legierungen daraus.

Stahl ist dem Fachmann bekannt. Unter "Stahl" werden im Rahmen der vorliegenden Erfindung Legierungen, die als Hauptbestandteil Eisen enthalten, verstanden. Dies entspricht der Definition von Stahl gemäß DIN EN 10020:2000-07.

Das mindestens eine erste Metall kann beschichtet oder unbeschichtet sein. Bevorzugt ist das mindestens eine erste Metall beschichtet. Geeignete Beschichtungen für das mindestens eine erste Metall sind dem Fachmann als solche bekannt und beispielsweise Haftvermittlerschichten, Farbe, Zink- oder Magnesiumbeschichtungen.

Bevorzugt ist das mindestens eine Metall verzinkt. "Verzinkt" bedeutet, dass das mindestens eine erste Metall mit einem weiteren Metall, insbesondere mit Zink oder Legierungen von Zink, beschichtet ist.

Besonders bevorzugt ist das mindestens eine erste Metall daher verzinkter Stahl.

Das Verzinken des mindestens einen ersten Metalls kann nach dem Fachmann bekannten Methoden erfolgen, beispielsweise durch Feuerverzinkung oder durch galvanisches Verzinken.

Ist das mindestens eine erste Metall verzinkt, so kann es darüber hinaus noch weitere Beschichtungen, wie beispielsweise Haftvermittlerschichten und/oder Farbe, aufweisen. Dies ist dem Fachmann bekannt.

Das Beschichten des mindestens einen ersten Metalls kann nach allen dem Fachmann bekannten Methoden erfolgen, beispielsweise kann die Beschichtung aus einer wässrigen Lösung oder einer Dispersion erfolgen.

Für das mindestens eine zweite Metall der mindestens einen zweiten Schicht gelten die zuvor beschriebenen Ausführungen und Bevorzugungen für das mindestens eine erste Metall der mindestens einen ersten Schicht entsprechend.

Gegenstand der vorliegenden Erfindung ist daher auch ein Laminat, bei dem das Laminat zusätzlich mindestens eine zweite Schicht mindestens eines zweiten Metalls umfasst, wobei das mindestens eine zweite Metall der mindestens einen zweiten Schicht ausgewählt ist aus der Gruppe bestehend aus Eisen, Aluminium, Kupfer, Nickel und Magnesium sowie Legierungen daraus.

Das Laminat umfasst mindestens eine weitere Schicht einer Polyamidzusammensetzung (PZ). Anders ausgedrückt bedeutet dies, dass die mindestens eine weitere Schicht aus der Polyamidzusammensetzung (PZ) besteht.

Die mindestens eine weitere Schicht einer Polyamidzusammensetzung (PZ) weist beispielsweise eine Dicke im Bereich von 0,02 bis 1,5 mm, bevorzugt im Bereich von 0,05 bis 1 mm und insbesondere bevorzugt im Bereich von 0,1 bis 0,5 mm auf.

Gegenstand der vorliegenden Erfindung ist daher auch ein Laminat, bei dem die mindestens eine weitere Schicht eine Dicke im Bereich von 0,02 bis 1,5 mm aufweist.

Gegenstand der vorliegenden Erfindung ist daher auch ein Laminat, bei dem die mindestens eine erste Schicht eine Dicke im Bereich von 0,1 mm bis 0,6 mm aufweist und/oder bei dem die mindestens eine weitere Schicht eine Dicke im Bereich von 0,02 bis 1,5 mm aufweist.

### Polyamidzusammensetzung (PZ)

Erfindungsgemäß enthält die Polyamidzusammensetzung (PZ) ein Copolyamid, hergestellt durch Polymerisation der Komponenten (A) Caprolactam, (B) mindestens eine C₄-C₄₀-Disäure und (C) mindestens ein C₄-C₂₀-Diamin.

"Ein Copolyamid" bedeutet im Rahmen der vorliegenden Erfindung sowohl genau ein Copolyamid als auch eine Mischung (Blend) aus zwei oder mehreren Copolyamiden.

Die Polyamidzusammensetzung (PZ) kann darüber hinaus zusätzlich mindestens ein weiteres Polymer enthalten.

"Mindestens ein weiteres Polymer" bedeutet im Rahmen der vorliegenden Erfindung sowohl genau ein weiteres Polymer als auch eine Mischung (Blend) aus zwei oder mehreren weiteren Polymeren.

Als mindestens ein weiteres Polymer eignen sich alle dem Fachmann bekannten weiteren Polymere. Es versteht sich von selbst, dass das mindestens eine weitere Polymer von dem Copolyamid verschieden ist.

Bevorzugt ist das mindestens eine weitere Polymer ausgewählt aus der Gruppe bestehend aus Polyethylen und Copolymeren aus zumindest zwei Monomeren, ausgewählt aus der Gruppe bestehend aus Ethylen, Acrylsäure, Maleinsäureanhydrid, Isobutylen, Propylen, Octen, Alkylacrylat und Alkylmethacrylat.

Gegenstand der vorliegenden Erfindung ist daher auch ein Laminat, bei dem die Polyamidzusammensetzung (PZ) zusätzlich mindestens ein weiteres Polymer ausgewählt aus der Gruppe bestehend aus Polyethylen und Copolymeren aus zumindest zwei Monomeren, ausgewählt aus der Gruppe bestehend aus Ethylen, Isobutylen, Propylen, Octen, Alkylacrylat, Alkylmethacrylat, Acrylsäure und Maleinsäureanhydrid, enthält.

Alkylacrylate sind dem Fachmann bekannt und werden auch als Acrylsäurealkylester bezeichnet. Alkylacrylate bilden sich bei Umsetzung von Acrylsäure mit einem Alkylalkohol. Erfindungsgemäß bevorzugt ist n-Butylacrylat als Alkylacrylat.

Alkylmethacrylate sind dem Fachmann ebenfalls bekannt und werden auch als Methacrylsäurealkylester bezeichnet. Alkylmethacrylate bilden sich bei Umsetzung von Methacrylsäure mit einem Alkylalkohol. Erfindungsgemäß bevorzugt ist Methylmethacrylat als Alkylmethacrylat.

Darüber hinaus kann das Laminat zusätzlich mindestens einen Füllstoff enthalten.

Das Laminat enthält den zusätzlich mindestens einen Füllstoff bevorzugt in der Polyamidzusammensetzung (PZ). Die Polyamidzusammensetzung (PZ) kann also zusätzlich mindestens einen Füllstoff enthalten.

"Mindestens ein Füllstoff" bedeutet im Rahmen der vorliegenden Erfindung sowohl genau ein Füllstoff als auch eine Mischung aus zwei oder mehreren Füllstoffen.

Als Füllstoff eignen sich alle dem Fachmann bekannten Füllstoffe, die mit dem Copolyamid sowie gegebenenfalls dem mindestens einen weiteren Polymer der Polyamidzusammensetzung (PZ) gemischt werden können.

Bevorzugt ist der mindestens eine Füllstoff ausgewählt aus der Gruppe bestehend aus anorganischen Füllstoffen, organischen Füllstoffen und Naturfüllstoffen.

Der mindestens eine Füllstoff kann ein Fasermaterial sein oder beispielsweise in Form von Kugeln vorliegen. Bevorzugt ist der mindestens eine Füllstoff ein Fasermaterial.

Unter "Fasermaterialien" werden im Rahmen der vorliegenden Erfindung sämtliche Materialien verstanden, die Fasern aufweisen, wie beispielsweise einzelne Fasern, Faserbündel (Rovings), Vliese, Gelege, Gewebe oder Gestricke.

Beispielsweise ist der mindestens eine Füllstoff daher ausgewählt aus der Gruppe bestehend aus Borfasermaterialien, Glasfasermaterialien, Kohlenstofffasermaterialien, Kieselsäurefasermaterialien, Keramikfasermaterialien, Basaltfasermaterialien, Metallfasermaterialien, Aramidfasermaterialen, Poly-(p-Phenylen-2,6-Benzobisoxazol)-Fasermaterialen, Polyesterfasermaterialien, Nylonfasermaterialien, Polyethylenfasermaterialien, Holzfasermaterialien, Flachsfasermaterialien, Hanffasermaterialien und Sisalfasermaterialien.

Besonders bevorzugt ist der mindestens eine Füllstoff ausgewählt aus der Gruppe bestehend aus Glasfasermaterialien, Kohlenstofffasermaterialien, Aramidfasermaterialen, Poly-(p-Phenylen-2,6-Benzobisoxazol)-Fasermaterialen, Borfasermaterialien, Metallfasermaterialien und Kaliumtitanatfasermaterialien. Insbesondere bevorzugt ist der mindestens eine Füllstoff ein Glasfasermaterial.

Gegenstand der vorliegenden Erfindung ist daher auch ein Laminat, bei dem die Polyamidzusammensetzung (PZ) zusätzlich mindestens einen Füllstoff ausgewählt aus der Gruppe bestehend aus anorganischen Füllstoffen, organischen Füllstoffen und Naturfüllstoffen enthält.

Beispielsweise enthält die Polyamidzusammensetzung (PZ) im Bereich von 30 bis 99,9 Gew.-% des Copolyamids, bevorzugt im Bereich von 40 bis 99,5 Gew.-% und insbesondere bevorzugt im Bereich von 50 bis 99 Gew.-%, jeweils bezogen auf die Summe der Gew.-% des Copolyamids, des mindestens einen weiteren Polymers und des mindestens einen Füllstoffs, bevorzugt bezogen auf das Gesamtgewicht der Polyamidzusammensetzung (PZ).

Die Polyamidzusammensetzung (PZ) enthält beispielsweise im Bereich von 0 bis 50 Gew.-%, bevorzugt im Bereich von 5 bis 40 Gew.-% und insbesondere bevorzugt im Bereich von 10 bis 30 Gew.-% des mindestens einen weiteren Polymers, jeweils bezogen auf die Summe der Gew.-% des Copolyamids, des mindestens einen weiteren Polymers und des mindestens einen Füllstoffs, bevorzugt bezogen auf das Gesamtgewicht der Polyamidzusammensetzung (PZ).

Die Polyamidzusammensetzung (PZ) enthält beispielsweise im Bereich von 0,1 bis 70 Gew.-% des mindestens einen Füllstoffs, bevorzugt im Bereich von 0,5 bis 60 Gew.-% und insbesondere bevorzugt im Bereich von 1 bis 50 Gew.-% des mindestens einen Füllstoffs, jeweils bezogen auf die Summe der Gew.-% des Copolyamids, des mindestens einen weiteren Polymers und des mindestens einen Füllstoffs, bevorzugt bezogen auf das Gesamtgewicht der Polyamidzusammensetzung (PZ).

Die Summe der Gew.-% des Copolyamids, des mindestens einen weiteren Polymers und des mindestens einen Füllstoffs ergibt üblicherweise 100 Gew.-%.

Die Polyamidzusammensetzung (PZ) kann darüber hinaus dem Fachmann bekannte Additive enthalten. Beispielsweise sind Additive, die in der Polyamidzusammensetzung (PZ) enthalten sein können, ausgewählt aus der Gruppe bestehend aus Stabilisatoren, Farbstoffen, Antistatika, Füllölen, Oberflächenverbesserern, Sikkativen, Entformungshilfsmitteln, Trennmitteln, Antioxidantien, Lichtstabilisatoren, PVC-Stabilisatoren, Gleitmitteln, Flammschutzmitteln, Treibmitteln, Schlagzähmodifikatoren, Haftvermittlern, Kopplungsmitteln und Nukleierungshilfsmitteln.

Gegenstand der vorliegenden Erfindung ist daher auch ein Laminat, bei dem die Polyamidzusammensetzung (PZ) zusätzlich mindestens ein Additiv ausgewählt aus der Gruppe bestehend aus Stabilisatoren, Farbstoffen, Antistatika, Füllölen, Oberflächenverbesserern, Sikkativen, Entformungshilfsmitteln, Trennmitteln, Antioxidantien, Lichtstabilisatoren, PVC-Stabilisatoren, Gleitmitteln, Flammschutzmitteln, Treibmitteln, Schlagzähmodifikatoren, Haftvermittlern, Kopplungsmitteln und Nukleierungshilfsmitteln enthält.

Die Additive sind dem Fachmann als solche bekannt. Kopplungsmittel werden auch als Vernetzungsmittel bezeichnet. Unter Haftvermittlern werden im Rahmen der vorliegenden Erfindung Additive verstanden, die die Haftung der Polyamidzusammensetzung (PZ) der mindestens einen weiteren Schicht an die mindestens eine erste Schicht sowie gegebenenfalls an die mindestens eine zweite Schicht weiter verbessern.

Die Polyamidzusammensetzung (PZ) weist bevorzugt eine Schmelzenthalpie ΔH2_{(PZ)} im Bereich von 20 bis 60 J/g, bevorzugt im Bereich von 25 bis 55 J/g und insbesondere bevorzugt im Bereich von 30 bis 50 J/g auf, bestimmt mittels dynamischer Differenzkalorimetrie (Differential Scanning Calorimetry; DSC) nach ISO 11357-4:2014.

Gegenstand der vorliegenden Erfindung ist daher auch ein Laminat, bei dem die Polyamidzusammensetzung (PZ) eine Schmelzenthalpie ΔH2_{(PZ)} im Bereich von 20 bis 60 J/g aufweist.

Die Schmelzenthalpie ΔH2_{(PZ)} ist ein Maß für die Kristallinität. Besteht die Polyamidzusammensetzung aus dem Copolyamid, so entspricht eine Kristallinität von 100 % einer Schmelzenthalpie ΔH2_{(PZ)} von 230 J/g, bestimmt mittels dynamischer Differenzkalorimetrie (Differential Scanning Calorimetry; DSC) nach ISO 11357-4:2014.

### Copolyamid

Erfindungsgemäß ist das in der Polyamidzusammensetzung (PZ) enthaltene Copolyamid hergestellt durch Polymerisation der Komponenten (A) Caprolactam, (B) mindestens eine C₄-C₄₀-Disäure und (C) mindestens ein C₄-C₂₀-Diamin.

Die Begriffe "Komponente (A)" und "Caprolactam" werden im Rahmen der vorliegenden Erfindung synonym gebraucht und besitzen daher die gleiche Bedeutung.

Die Begriffe "Komponente (B)" und "mindestens eine C₄-C₄₀-Disäure" werden im Rahmen der vorliegenden Erfindung ebenfalls synonym gebraucht und besitzen daher die gleiche Bedeutung.

Die Begriffe "Komponente (C)" und "mindestens ein C₄-C₂₀-Diamin" werden im Rahmen der vorliegenden Erfindung ebenfalls synonym gebraucht und besitzen daher die gleiche Bedeutung.

Das Copolyamid kann hergestellt werden durch Polymerisation von beliebigen Mengen der Komponenten (A), (B) und (C).

Bevorzugt wird das Copolyamid hergestellt durch Polymerisation von 20 bis 80 Gew.-% der Komponente (A), besonders bevorzugt im Bereich von 35 bis 75 Gew.-% und insbesondere bevorzugt im Bereich von 50 bis 70 Gew.-%, jeweils bezogen auf die Summe der Gewichtsprozente der Komponenten (A), (B) und (C).

Gegenstand der vorliegenden Erfindung ist daher auch ein Laminat, bei dem das Copolyamid hergestellt ist durch Polymerisation von 20 bis 80 Gew.-% der Komponente (A) bezogen auf die Summe der Gew.-% der Komponenten (A), (B) und (C).

Bei der Polymerisation werden die Komponenten (B) und (C) bevorzugt so eingesetzt, dass sie zusammen 20 bis 80 Gew.-%, bevorzugt 25 bis 65 Gew.-% und insbesondere bevorzugt 30 bis 50 Gew.-% ergeben, bezogen auf die Summe der Gewichtsprozente der Komponenten (A), (B) und (C).

Gegenstand der vorliegenden Erfindung ist daher auch ein Laminat, bei dem das Copolyamid hergestellt ist durch Polymerisation von 20 bis 80 Gew.-% der Komponenten (B) und (C), bezogen auf die Summe der Gewichtsprozente der Komponenten (A), (B) und (C).

Es versteht sich von selbst, dass sich die Gewichtsprozente der Komponenten (A), (B) und (C) auf die Gewichtsprozente der Komponenten (A), (B) und (C) vor der Polymerisation beziehen, also wenn die Komponenten (A), (B) und (C) noch nicht miteinander reagiert haben. Während der Polymerisation der Komponenten (A), (B) und (C) kann sich das Gewichtsverhältnis der Komponenten (A), (B) und (C) gegebenenfalls ändern.

Es werden bevorzugt im Bereich von 45 bis 55 mol-% der Komponente (B) und im Bereich von 45 bis 55 mol-% der Komponente (C), jeweils bezogen auf die Summe der mol-% der Komponenten (B) und (C) polymerisiert.

Besonders bevorzugt werden im Bereich von 47 bis 53 mol-% der Komponente (B) und im Bereich von 47 bis 53 mol-% der Komponente (C), jeweils bezogen auf die Summe der mol-% der Komponenten (B) und (C), polymerisiert.

Am meisten bevorzugt werden im Bereich von 49 bis 51 mol-% der Komponente (B) und im Bereich von 49 bis 51 mol-% der Komponente (C), jeweils bezogen auf die Summe der mol-% der Komponenten (B) und (C), polymerisiert.

Es ist also am meisten bevorzugt, dass die Komponenten (B) und (C) in einem molaren Verhältnis von 1:1 zueinander polymerisiert werden.

Es versteht sich von selbst, dass sich die mol-% der Komponenten (B) und (C) auf die mol-% der Komponenten (B) und (C) beziehen bevor diese miteinander reagiert haben. Während der Polymerisation der Komponenten (A), (B) und (C) kann sich das molare Verhältnis der Komponenten (B) und (C) zueinander gegebenenfalls ändern.

Zur Herstellung der Copolyamids kann zusätzlich zu der Komponente (A) eine Komponente (A1), mindestens ein zusätzliches Lactam, polymerisiert werden Es versteht sich von selbst, dass das mindestens eine zusätzliche Lactam von Caprolactam verschieden ist.

Die Begriffe "Komponente (A1)" und "mindestens ein zusätzliches Lactam" werden im Rahmen der vorliegenden Erfindung synonym gebraucht und besitzen daher die gleiche Bedeutung.

"Mindestens ein zusätzliches Lactam" bedeutet im Rahmen der vorliegenden Erfindung sowohl genau ein zusätzliches Lactam als auch eine Mischung aus zwei oder mehreren zusätzlichen Lactamen.

Geeignete zusätzliche Lactame sind dem Fachmann bekannt. Erfindungsgemäß bevorzugt als das mindestens eine zusätzliche Lactam sind Lactame mit 4 bis 12 Kohlenstoffatomen.

Unter "Lactamen" werden im Rahmen der vorliegenden Erfindung zyklische Amide verstanden, die im Ring vorzugsweise 4 bis 12, besonders bevorzugt 5 bis 8 Kohlenstoffatome aufweisen.

Geeignete zusätzliche Lactame sind beispielsweise ausgewählt aus der Gruppe bestehend aus 3-Aminopropansäurelactam (Propio-3-Lactam; β-Lactam; β-Propiolactam), 4-Aminobutansäurelactam (Butyro-4-Lactam; γ-Lactam; γ-Butyrolactam), 5-Aminopentansäurelactam (2-Piperidinon; δ-Lactam; δ-Valerolactam), 7-Aminoheptansäurelactam (Heptano-7-Lactam; ζ-Lactam; ζ-Heptanoiactam), 8-Aminooktansäurelactam (Oktano-8-Lactam; η-Oktanolactam), 9-Aminononansäurelactam (Nonano-9-Lactam; θ-Lactam; θ-Nonanolactam), 10-Aminodekansäurelactam (Dekano-10-Lactam; ω-Dekanolactam), 11-Aminoundekansäurelactam (Undekano-11-Lactam; ω-Undekanolactam) und 12-Aminododekansäurelactam (Dodekano-12-Lactam; ω-Dodekanolactam).

Bevorzugt wird keine Komponente (A1) polymerisiert zur Herstellung des Copolyamids.

Erfindungsgemäß wird das Copolyamid hergestellt durch Polymerisation der Komponenten (A), (B) und (C) sowie gegebenenfalls (A1). Die Polymerisation der Komponenten (A), (B) und (C) sowie gegebenenfalls (A1) ist dem Fachmann bekannt. Üblicherweise ist die Polymerisation der Komponente (A) sowie gegebenenfalls (A1) mit den Komponenten (B) und (C) eine Kondensationsreaktion. Während der Kondensationsreaktion reagiert die Komponente (A) sowie gegebenenfalls (A1) mit den Komponenten (B) und (C). Dabei bilden sich Amidbindungen zwischen den einzelnen Komponenten aus. Üblicherweise liegt die Komponente (A) während der Polymerisation zumindest teilweise offenkettig, also als ε-Aminocapronsäure vor.

Die Polymerisation der Komponenten (A), (B) und (C) sowie gegebenenfalls (A1) kann in Gegenwart eines Katalysators stattfinden. Als Katalysator eignen sich alle dem Fachmann bekannten Katalysatoren, die die Polymerisation der Komponenten (A), (B) und (C) sowie gegebenenfalls (A1) katalysieren. Derartige Katalysatoren sind dem Fachmann bekannt. Bevorzugte Katalysatoren sind Phosphorverbindungen wie beispielsweise Natriumhypophosphit, phosphorige Säure, Triphenylphosphin oder Triphenylphosphit.

Bei der Polymerisation der Komponenten (A), (B) und (C) sowie gegebenenfalls (A1) bildet sich das Copolyamid, das daher Baueinheiten enthält, die von der Komponente (A) abgeleitet sind, Baueinheiten, die von der Komponente (B) abgeleitet sind, und Baueinheiten, die von der Komponente (C) abgeleitet sind sowie gegebenenfalls Baueinheiten, die von der Komponente (A1) abgeleitet sind.

Bei der Polymerisation der Komponenten (A), (B) und (C) sowie gegebenenfalls (A1) bildet sich das Copolyamid als Copolymer. Das Copolymer kann ein statistisches Copolymer sein, ebenso ist es möglich, dass es sich um ein Blockcopolymer handelt.

In einem Blockcopolymer bilden sich Blöcke von Einheiten, die von den Komponenten (B) und (C) abgeleitet sind, und Blöcke von Einheiten, die von der Komponente (A) abgeleitet sind. Diese wechseln sich ab.

Bei einem statistischen Copolymer wechseln sich Baueinheiten, die von der Komponente (A) abgeleitet sind, mit Baueinheiten, die von den Komponenten (B) und (C) abgeleitet sind, ab. Diese Abwechslung erfolgt statistisch. Beispielsweise kann auf zwei von den Komponenten (B) und (C) abgeleitete Baueinheiten eine Baueinheit, die von der Komponente (A) abgeleitet ist, folgen, auf die wiederum eine von den Komponenten (B) und (C) abgeleitete Baueinheit folgt, auf die dann drei Baueinheiten folgen, die von der Komponente (A) abgeleitet sind.

Die Herstellung des Copolyamids umfasst bevorzugt die folgenden Schritte:
i) Polymerisation der Komponenten (A), (B) und (C) unter Erhalt eines ersten Copolyamids,
ii) Granulieren des in Schritt i) erhaltenen ersten Copolyamids unter Erhalt eines granulierten Copolyamids,
iii) Extraktion des in Schritt ii) erhaltenen granulierten Copolyamids mit Wasser unter Erhalt eines extrahierten Copolyamids,
iv) Trocknen des in Schritt iii) erhaltenen extrahierten Copolyamids bei einer Temperatur (T_{T}) unter Erhalt des Copolyamids.

Die Polymerisation in Schritt i) kann in allen dem Fachmann bekannten Reaktoren stattfinden, bevorzugt sind Rührkesselreaktoren. Es können zusätzlich dem Fachmann bekannte Hilfsmittel zur Verbesserung der Reaktionsführung, wie beispielsweise Entschäumer wie Polydimethylsiloxan (PDMS), eingesetzt werden.

In Schritt ii) kann das in Schritt i) erhaltene erste Copolyamid nach allen dem Fachmann bekannten Methoden granuliert werden, beispielsweise mittels Stranggranulierung oder Unterwassergranulierung.

Die Extraktion in Schritt iii) kann nach allen dem Fachmann bekannten Methoden erfolgen. Während der Extraktion in Schritt iii) werden üblicherweise während der Polymerisation der Komponenten (A), (B) und (C) in Schritt i) gebildete Nebenprodukte aus dem granulierten Copolyamid extrahiert.

In Schritt iv) wird das in Schritt iii) erhaltene extrahierte Copolyamid getrocknet. Verfahren zum Trocknen sind dem Fachmann bekannt. Erfindungsgemäß wird das extrahierte Copolyamid bei einer Temperatur (T_{T}) getrocknet. Die Temperatur (T_{T}) liegt vorzugsweise oberhalb der Glasübergangstemperatur (T_{G(C)}) des Copolyamids und unterhalb der Schmelztemperatur (T_{M(C)}) des Copolyamids.

Bevorzugt liegt die Temperatur (T_{T}) oberhalb von 120 °C und unterhalb der Schmelztemperatur (T_{M(C)}) des Copolyamids.

Die Trocknung in Schritt iv) erfolgt üblicherweise in einem Zeitraum im Bereich von 1 bis 100 Stunden, bevorzugt im Bereich von 2 bis 50 Stunden und insbesondere bevorzugt im Bereich von 3 bis 40 Stunden.

Es besteht die Vorstellung, dass durch das Trocknen in Schritt iv) das Molekulargewicht des Copolyamids weiter erhöht wird.

Das Copolyamid weist üblicherweise eine Glasübergangstemperatur (T_{G(C)}) auf. Die Glasübergangstemperatur (T_{G(C)}) liegt beispielsweise im Bereich von 10 bis 90 °C, bevorzugt im Bereich von 20 bis 70 °C und insbesondere bevorzugt im Bereich von 25 bis 50 °C, bestimmt gemäß ISO 11357-2:2014.

Gegenstand der vorliegenden Erfindung ist daher auch ein Laminat, bei dem das Copolyamid eine Glasübergangstemperatur (T_{G(C)}) aufweist, wobei die Glasübergangstemperatur (T_{G(C)}) im Bereich von 10 bis 90 °C liegt.

Die Glasübergangstemperatur (T_{G(C)}) des Copolyamids bezieht sich entsprechend der ISO 11357-2:2014 im Rahmen der vorliegenden Erfindung auf die Glasübergangstemperatur (T_{G(C)}) des trockenen Copolyamids.

"Trocken" bedeutet im Rahmen der vorliegenden Erfindung, dass das Copolyamid weniger als 1 Gew.-%, bevorzugt weniger als 0,5 Gew.-% und insbesondere bevorzugt weniger als 0,1 Gew.-% Wasser enthält, bezogen auf das Gesamtgewicht des Copolyamids. Mehr bevorzugt bedeutet "trocken", dass das Copolyamid kein Wasser enthält, und am meisten bevorzugt, dass das Copolyamid kein Lösungsmittel enthält.

Das Copolyamid weist darüber hinaus üblicherweise eine Schmelztemperatur (T_{M(C)}) auf. Die Schmelztemperatur (T_{M(C)}) des Copolyamids liegt beispielsweise im Bereich von 180 bis 215 °C, bevorzugt im Bereich von 170 bis 210 °C und insbesondere bevorzugt im Bereich von 180 bis 200 °C, bestimmt gemäß ISO 11357-3:2014.

Gegenstand der vorliegenden Erfindung ist daher auch ein Laminat, bei dem das Copolyamid eine Schmelztemperatur (T_{M(C)}), die im Bereich von 180 bis 215 °C liegt, aufweist.

Das Copolyamid weist im Allgemeinen eine Viskositätszahl (VZ_{(C)}) im Bereich von 100 bis 300 ml/g auf, bestimmt in einer 0,5-gewichtsprozentigen Lösung des Copolyamids in einer Mischung aus Phenol/o-Dichlorbenzol im Gewichtsverhältnis 1 : 1.

Bevorzugt liegt die Viskositätszahl (VZ_{(C)}) des Copolyamids im Bereich von 160 bis 290 ml/g und besonders bevorzugt im Bereich von 170 bis 280 ml/g, bestimmt in einer 0,5-gewichtsprozentigen Lösung des Copolyamids in einer Mischung aus Phenol/o-Dichlorbenzol im Gewichtsverhältnis 1 : 1.

Das Copolyamid weist eine Amidfunktionenkonzentration im Bereich von 3,5 bis 7 Amidgruppen / 1000 g/mol auf, bevorzugt im Bereich von 4 bis 6,5 Amidgruppen / 1000 g/mol und besonders bevorzugt im Bereich von 4,5 bis 6 Amidgruppen / 1000 g/mol.

Gegenstand der vorliegenden Erfindung ist daher ein Laminat, bei dem das Copolyamid eine Amidfunktionenkonzentration im Bereich von 3,5 bis 7 Amidgruppen / 1000 g/mol aufweist.

Die Amidfunktionenkonzentration wird rechnerisch ermittelt. Hierzu wird über das Molekulargewicht der einzelnen Baueinheiten des Copolyamids gemittelt. 1000 dividiert durch das gemittelte Molekulargewicht ergibt dann die Amidfunktionenkonzentration.

Beispielsweise ist das gemittelte Molekulargewicht der einzelnen Baueinheiten von Polyamid 6 (PA 6) 113 g/mol. Die Amidfunktionenkonzentration ergibt sich dann als 1000 / 113 g/mol = 8,85 Amidgruppen / 1000 g/mol.

Beispielsweise ist das gemittelte Molekulargewicht der einzelnen Baueinheiten von Polyamid 6.36 (PA 6.36) 323 g/mol. Die Amidfunktionenkonzentration ergibt sich dann als 1000/323 g/mol = 3,10 Amidgruppen / 1000 g/mol.

Beispielsweise ist das gemittelte Molekulargewicht der einzelnen Baueinheiten von Polyamid 6/6.36 (PA 6/6.36) mit 40 Gew.-% 6.36-Baueinheiten 0,6 * PA 6 + 0,4 * PA 6.36 = 0,6 * 113 g/mol + 0,4 * 323 g/mol = 197 g/mol. Die Amidfunktionenkonzentration ergibt sich dann als 1000 / 197 g/mol = 5,08 Amidgruppen / 1000 g/mol.

Beispielsweise ist das gemittelte Molekulargewicht von Polyamid 66 (PA 66) 113 g/mol. Für Polyamid 6/66 ergibt sich dann, unabhängig vom Anteil an PA 6- und PA 66-Einheiten, eine Amidfunktionenkonzentration von 1000 / g/mol = 8,85 Amidgruppen / 1000 g/mol.

Das erfindungsgemäße Copolyamid weist außerdem nach Lagerung für 14 Tage bei 70 °C und 62 % relativer Luftfeuchte, bevorzugt im Bereich von 1,0 bis 2,7 Gew.-% Wasser auf, besonders bevorzugt im Bereich von 1,3 bis 2,5 Gew.-% und am meisten bevorzugt im Bereich von 1,5 bis 2,3 Gew.-%, jeweils bezogen auf das Gesamtgewicht des Copolyamids nach Lagerung für 14 Tage bei 70 °C und 62 % relativer Luftfeuchtigkeit.

### Komponente (A)

Erfindungsgemäß ist die Komponente (A) Caprolactam. Caprolactam ist dem Fachmann bekannt und wird auch als ε-Caprolactam, ε-Lactam, Hexano-6-Lactam oder Hexahydro-2H-azepin-2-on bezeichnet. Caprolactam ist das zyklische Amid der ε-Aminocapronsäure und trägt die CAS-Nr. 105-60-2.

### Komponente (B)

Erfindungsgemäß ist die Komponente (B) mindestens eine C₄-C₄₀-Disäure.

"Mindestens eine C₄-C₄₀-Disäure" bedeutet im Rahmen der vorliegenden Erfindung sowohl genau eine C₄-C₄₀-Disäure als auch eine Mischung aus zwei oder mehreren C₄-C₄₀-Disäuren.

Unter "C₄-C₄₀-Disäuren" werden im Rahmen der vorliegenden Erfindung aliphatische und/oder aromatische Verbindungen, welche gesättigt oder ungesättigt sind, mit 2 bis 38 Kohlenstoffatomen und zwei Carboxygruppen (-COOH-Gruppen) verstanden. Die 2 bis 38 Kohlenstoffatome können in der Hauptkette oder in Seitenketten angeordnet sein sein. Die C₄-C₄₀-Disäuren können also verzweigt oder unverzweigt oder cycloaliphatisch sein.

Beispielsweise ist die mindestens eine C₄-C₄₀-Disäure Butandisäure (Bernsteinsäure), Pentandisäure (Glutarsäure), Hexandisäure (Adipinsäure), Heptansäure (Pimelinsäure), Oktandisäure (Korksäure, Subarinsäure), Nonandisäure (Azelainsäure), Dekandisäure (Sebazinsäure), Undekandisäure, Dodekandisäure, Tridekandisäure, Tetradekandisäure oder Hexadekandisäure.

Bevorzugt ist die Komponente (B) ausgewählt aus der Gruppe bestehend aus Hexandisäure, Dekandisäure und Dodekandisäure.

Weiterhin bevorzugt ist die Komponente (B) mindestens eine C₃₂-C₄₀-Disäure.

Bevorzugt ist die Komponente also ausgewählt aus der Gruppe bestehend aus Hexandisäure, Dekandisäure, Dodekandisäure und C₃₂-C₄₀-Disäuren.

Eine "C₃₂-C₄₀-Disäure" wird auch als "C₃₂-C₄₀-Dimersäure" oder als "C₃₂-C₄₀-Dimerfettsäure" bezeichnet. Die Begriffe "C₃₂-C₄₀-Disäure", "C₃₂-C₄₀-Dimersäure" und "C₃₂-C₄₀-Dimerfettsäure" werden daher im Rahmen der vorliegenden Erfindung synonym gebraucht und besitzen daher die gleiche Bedeutung.

C₃₂-C₄₀-Dimersäuren sind dem Fachmann als solche bekannt und werden üblicherweise hergestellt durch Dimerisierung ungesättigter Fettsäuren. Diese Dimerisierung kann beispielsweise durch Tonerden katalysiert werden.

Geeignete ungesättigte Fettsäuren zur Herstellung der mindestens einen C₃₂-C₄₀-Dimersäure sind dem Fachmann bekannt und beispielsweise ungesättigte C₁₆-Fettsäuren, ungesättigte C₁₈-Fettsäuren und ungesättigte C₂₀-Fettsäuren.

Bevorzugt wird die Komponente (B) daher hergestellt ausgehend von ungesättigten Fettsäuren, ausgewählt aus der Gruppe bestehend aus ungesättigten C₁₆-Fettsäuren, ungesättigten C₁₈-Fettsäuren und ungesättigten C₂₀-Fettsäuren, wobei die ungesättigten C₁₈-Fettsäuren besonders bevorzugt sind.

Gegenstand der vorliegenden Erfindung ist daher auch ein Laminat, bei dem die Komponente (B) hergestellt wird ausgehend von ungesättigten Fettsäuren, ausgewählt aus der Gruppe bestehend aus ungesättigten C₁₆-Fettsäuren, ungesättigten C₁₈-Fettsäuren und ungesättigten C₂₀-Fettsäuren.

Eine geeignete ungesättigte C₁₆-Fettsäure ist beispielsweise Palmitoleinsäure ((9Z)-Hexadeca-9-ensäure).

Geeignete ungesättigte C₁₈-Fettsäuren sind beispielsweise ausgewählt aus der Gruppe bestehend aus Petroselinsäure ((6Z)-Oktadeka-6-ensäure), Ölsäure ((9Z)-Oktadeka-9-ensäure), Elaidinsäure ((9E)-Oktadeka-9-ensäure), Vaccensäure ((11E)-Oktadeka-11-ensäure), Linolsäure ((9Z,12Z)-Oktadeka-9,12-diensäure), α-Linolensäure ((9Z,12Z,15Z)-Oktadeka-9,12,15-triensäure), γ-Linolensäure ((6Z,9Z,12Z)-Oktadeka-6,9,12-triensäure), Calendulasäure ((8E,10E,12Z)-Oktadeka-8,10,12-triensäure), Punicinsäure ((9Z,11E,13Z)-Oktadeka-9,11,13-triensäure), α-Elaeostearinsäure ((9Z,11E,13E)-Oktadeka-9,11,13-triensäure) und β-Elaeostearinsäure ((9E,11E,13E)-Oktadeka-9,11,13-triensäure). Besonders bevorzugt sind ungesättigte C₁₈-Fettsäuren ausgewählt aus der Gruppe bestehend aus Petroselinsäure ((6Z)-Oktadeka-6-ensäure), Ölsäure ((9Z)-Oktadeka-9-ensäure), Elaidinsäure ((9E)-Oktadeka-9-ensäure), Vaccensäure ((11E)-Oktadeka-11-ensäure), Linolsäure ((9Z,12Z)-Oktadeka-9,12-diensäure).

Geeignete ungesättigte C₂₀-Fettsäuren sind beispielsweise ausgewählt aus der Gruppe bestehend aus Gadoleinsäure ((9Z)-Eicosa-9-ensäure), Icosensäure ((11Z)-Eicosa-11-ensäure), Arachidonsäure ((5Z,8Z,11Z,14Z)-Eicosa-5,8,11,14-tetraensäure) und Timnodonsäure ((5Z,8Z,11Z,14Z,17Z)-Eicosa-5,8,11,14,17-pentaensäure).

Die Komponente (B) ist insbesondere bevorzugt mindestens eine C₃₆-Dimersäure.

Die mindestens eine C₃₆-Dimersäure wird bevorzugt hergestellt ausgehend von ungesättigten C₁₈-Fettsäuren. Besonders bevorzugt wird die C₃₆-Dimersäure hergestellt ausgehend von C₁₈-Fettsäuren, ausgewählt aus der Gruppe bestehend aus Petroselinsäure ((6Z)-Oktadeka-6-ensäure), Ölsäure ((9Z)-Oktadeka-9-ensäure), Elaidinsäure ((9E)-Oktadeka-9-ensäure), Vaccensäure ((11E)-Oktadeka-11-ensäure) und Linolsäure ((9Z,12Z)-Oktadeka-9,12-diensäure).

Bei der Herstellung der Komponente (B) aus ungesättigten Fettsäuren können sich zudem Trimersäuren bilden, außerdem können Reste an nicht reagierter ungesättigter Fettsäure übrig bleiben.

Die Bildung von Trimersäuren ist dem Fachmann bekannt.

Erfindungsgemäß bevorzugt enthält die Komponente (B) höchstens 0,5 Gew.-% nicht reagierter ungesättigter Fettsäure und höchstens 0,5 Gew.-% Trimersäure, besonders bevorzugt höchstens 0,2 Gew.-% nicht reagierter ungesättigter Fettsäure und höchstens 0,2 Gew.-% Trimersäure, jeweils bezogen auf das Gesamtgewicht der Komponente (B).

Als Dimersäuren (auch bekannt als dimerisierte Fettsäuren oder Dimerfettsäuren) werden allgemein und insbesondere im Rahmen der vorliegenden Erfindung also Gemische bezeichnet, die durch Oligomerisierung von ungesättigten Fettsäuren hergestellt werden. Sie sind beispielsweise herstellbar durch katalytische Dimerisierung von pflanzlichen, ungesättigten Fettsäuren, wobei als Ausgangsstoffe insbesondere ungesättigte C₁₆- bis C₂₀-Fettsäuren eingesetzt werden. Die Verknüpfung verläuft vornehmlich nach dem Diels-Alder-Typ und es resultieren, je nach Zahl und Lage der Doppelbindungen der zur Herstellung der Dimersäuren eingesetzten Fettsäuren, Gemische aus vornehmlich dimeren Produkten, die zwischen den Carboxylgruppen cycloaliphatische, linear-aliphatische, verzweigt aliphatische und auch C₆-aromatische Kohlenwasserstoffgruppen aufweisen. Je nach Mechanismus und/oder gegebenenfalls nachträglicher Hydrierung können die aliphatischen Reste gesättigt oder ungesättigt sein und auch der Anteil von aromatischen Gruppen kann variieren. Die Reste zwischen den Carbonsäuregruppen enthalten dann beispielsweise 32 bis 40 Kohlenstoffatome. Bevorzugt werden zur Herstellung Fettsäuren mit 18 Kohlenstoffatomen eingesetzt, sodass das dimere Produkt also 36 Kohlenstoffatome aufweist. Vorzugsweise weisen die Reste, welche die Carboxylgruppen der Dimerfettsäuren verbinden, keine ungesättigten Bindungen und keine aromatischen Kohlenwasserstoffreste auf.

Im Sinne der vorliegenden Erfindung werden bei der Herstellung also bevorzugt C₁₈-Fettsäuren eingesetzt. Besonders bevorzugt werden Linolen-, Linol- und/oder Ölsäure eingesetzt.

In Abhängigkeit von der Reaktionsführung entstehen bei der oben bezeichneten Oligomerisierung Gemische, die hauptsächlich dimere, aber auch trimere Moleküle sowie monomere Moleküle und sonstige Nebenprodukte enthalten. Üblicherweise wird destillativ gereinigt. Handelsübliche Dimersäuren enthalten im Allgemeinen mindestens 80 Gew.-% dimere Moleküle, bis zu 19 Gew.-% trimere Moleküle und maximal 1 Gew. % monomerer Moleküle und sonstiger Nebenprodukte.

Es ist bevorzugt, Dimersäuren einzusetzen, die zu mindestens 90 Gew.-%, bevorzugt zu mindestens 95 Gew.-%, ganz besonders bevorzugt zu mindestens 98 Gew.-% aus dimeren Fettsäuremolekülen bestehen.

Die Bestimmung der Anteile von monomeren, dimeren und trimeren Molekülen sowie sonstigen Nebenprodukten in den Dimersäuren kann beispielsweise mittels Gaschromatografie (GC) erfolgen. Dabei werden die Dimersäuren vor der GC- Analyse über die Bortrifluorid-Methode zu den entsprechenden Methylestern umgesetzt (vergleiche DIN EN ISO 5509) und dann mittels GC analysiert.

Als grundlegendes Kennzeichen für "C₃₂-C₄₀-Dimersäuren" gilt im Rahmen der vorliegenden Erfindung also, dass deren Herstellung die Oligomerisierung von ungesättigten Fettsäuren umfasst. Bei dieser Oligomerisierung entstehen vornehmlich, das heißt bevorzugt, zu mindestens 80 Gew.-%, besonders bevorzugt zu mindestens 90 Gew.-%, ganz besonders bevorzugt zu mindestens 95 Gew.-% und insbesondere zu mindestens 98 Gew.-% dimere Produkte. Die Tatsache, dass bei der Oligomerisierung also überwiegend dimere Produkte entstehen, die genau zwei Fettsäuremoleküle enthalten, rechtfertigt diese ohnehin gängige Benennung. Ein alternativer Ausdruck für den einschlägigen Begriff "Dimersäuren" ist also "Gemisch enthaltend dimerisierte Fettsäuren".

Die einzusetzenden Dimersäuren sind als Handelsprodukte zu erhalten. Zu nennen sind beispielsweise Radiacid 0970, Radiacid 0971, Radiacid 0972, Radiacid 0975, Radiacid 0976 und Radiacid 0977 der Firma Oleon, Pripol 1006, Pripol 1009, Pripol 1012, und Pripol 1013 der Firma Croda, Empol 1008, Empol 1012, Empol 1061 und Empol 1062 der Firma BASF SE sowie Unidyme 10 und Unidyme TI der Firma Arizona Chemical.

Die Komponente (B) weist beispielsweise eine Säurezahl im Bereich von 190 bis 200 mg KOH/g auf.

### Komponente (C)

Die Komponente (C) ist erfindungsgemäß mindestens ein C₄-C₂₀-Diamin.

"Mindestens ein C₄-C₂₀-Diamin" bedeutet im Rahmen der vorliegenden Erfindung sowohl genau ein C₄-C₂₀-Diamin, als auch eine Mischung aus zwei oder mehreren C₄-C₂₀-Diaminen.

Bevorzugt ist die Komponente (C) mindestens ein C₄-C₁₂-Diamin.

Unter "C₄-C₂₀-Diamin" werden im Rahmen der vorliegenden Erfindung aliphatische und/oder aromatische Verbindungen mit 4 bis 20 Kohlenstoffatomen und zwei Aminogruppen (NH₂-Gruppen) verstanden. Die aliphatischen und/oder aromatischen Verbindungen können unsubstituiert oder zusätzlich zumindest monosubstituiert sein. Für den Fall, dass die aliphatischen und/oder aromatischen Verbindungen zusätzlich zumindest monosubstituiert sind, können sie ein, zwei oder mehrere Substituenten tragen, die an der Polymerisation der Komponenten (A), (B) und (C) nicht teilnehmen. Derartige Substituenten sind beispielsweise Alkyl- oder Cycloalkylsubstituenten. Diese sind dem Fachmann als solche bekannt. Bevorzugt ist das mindestens eine C₄-C₂₀-Diamin unsubstituiert. Entsprechende Ausführungen gelten für C₄-C₁₂-Diamin. Geeignete Komponenten (C) sind beispielsweise ausgewählt aus der Gruppe bestehend aus 1,4-Diaminobutan (Butan-1,4-Diamin; Tetrametylendiamin; Putrescin), 1,5-Diaminopentan (Pentametylendiamin; Pentan-1,5-Diamin; Cadaverin), 1,6-Diaminohexan (Hexamethylendiamin; Hexan-1,6-Diamin), 1,7-Diaminoheptan, 1,8-Diaminooktan, 1,9-Diaminononan, 1,10-Diaminodekan (Dekamethylendiamin), 1,11-Diaminoundekan (Undecamethylendiamin) und 1,12-Diaminododekan (Dodecamethylendiamin).

Bevorzugt ist die Komponente (C) ausgewählt aus der Gruppe bestehend aus Tetrametylendiamin, Pentametylendiamin, Hexamethylendiamin, Dekamethylendiamin und Dodekamethylendiamin.

Gegenstand der vorliegenden Erfindung ist daher auch ein Laminat, bei dem die Komponente (C) ausgewählt ist aus der Gruppe bestehend aus Tetrametylendiamin, Pentametylendiamin, Hexamethylendiamin, Dekamethylendiamin und Dodekamethylendiamin.

### Herstellung

Das erfindungsgemäße Laminat kann nach allen dem Fachmann bekannten Methoden hergestellt werden.

Bevorzugt erfolgt die Herstellung des Laminats in einem kontinuierlichen Verfahren.

Für die Polyamidzusammensetzung (PZ) im erfindungsgemäßen Verfahren gelten die zuvor beschriebenen Ausführungen und Bevorzugungen wie für die Polyamidzusammensetzung (PZ) des Laminats entsprechend. Für das Copolyamid im erfindungsgemäßen Verfahren gelten die zuvor beschriebenen Ausführungen und Bevorzugungen für das Copolyamid des Laminats ebenfalls entsprechend. Ebenso gelten für das mindestens eine erste Metall im erfindungsgemäßen Verfahren die zuvor beschriebenen Ausführungen und Bevorzugungen für das mindestens eine erste Metall des Laminats entsprechend.

Bevorzugt wird daher das erfindungsgemäße Laminat in einem Verfahren hergestellt, umfassend die folgenden Schritte:
a) Bereitstellen einer Folie aus einer Polyamidzusammensetzung (PZ), die ein Copolyamid hergestellt durch Polymerisation der Komponenten
   (A) Caprolactam,
   (B) mindestens eine C₄-C₄₀-Disäure und
   (C) mindestens ein C₄-C₂₀-Diamin,
   enthält,
   wobei das Copolyamid eine Amidfunktionenkonzentration im Bereich von 3,5 bis 7 Amidgruppen / 1000 g/mol aufweist,
b) Erwärmen einer ersten Platte aus mindestens einem ersten Metall,
c) Verpressen der erwärmten ersten Platte aus Schritt b) mit der in Schritt a) bereitgestellten Folie unter Erhalt des Laminats.

Gegenstand der vorliegenden Erfindung ist daher auch ein Verfahren zur Herstellung eines erfindungsgemäßen Laminats, umfassend die Schritte
a) Bereitstellen einer Folie aus einer Polyamidzusammensetzung (PZ), die ein Copolyamid hergestellt durch Polymerisation der Komponenten
   (A) Caprolactam,
   (B) mindestens eine C₄-C₄₀-Disäure und
   (C) mindestens ein C₄-C₂₀-Diamin,
   enthält,
   wobei das Copolyamid eine Amidfunktionenkonzentration im Bereich von 3,5 bis 7 Amidgruppen / 1000 g/mol aufweist und
b) Erwärmen einer ersten Platte aus mindestens einem ersten Metall,
c) Verpressen der erwärmten ersten Platte aus Schritt b) mit der in Schritt a) bereitgestellten Folie unter Erhalt des Laminats.

In Schritt a) wird eine Folie aus der Polyamidzusammensetzung (PZ) bereitgestellt. Die in Schritt a) bereitgestellte Folie besteht aus der Polyamidzusammensetzung (PZ). Verfahren zur Bereitstellung einer Folie aus einer Polyamidzusammensetzung (PZ) sind dem Fachmann als solche bekannt. Bevorzugt wird die Folie in Schritt a) durch ein Extrusionsverfahren bereitgestellt.

Gegenstand der vorliegenden Erfindung ist daher auch ein Verfahren, bei dem die Folie in Schritt a) durch ein Extrusionsverfahren bereitgestellt wird.

Geeignete Extrusionsverfahren zur Bereitstellung der Folie aus der Polyamidzusammensetzung (PZ) sind dem Fachmann bekannt und beispielsweise Castverfahren, Kalandrierverfahren, Blasverfahren oder Multiblasverfahren.

Die in Schritt a) bereitgestellte Folie aus der Polyamidzusammensetzung (PZ) kann beliebige Dicken aufweisen. Üblicherweise weist die in Schritt a) bereitgestellte Folie aus der Polyamidzusammensetzung (PZ) eine Dicke im Bereich von 1 bis 20 % größer auf als die mindestens eine weitere Schicht des herzustellenden Laminats, bevorzugt im Bereich von 2 bis 15 % größer auf als die mindestens eine weitere Schicht des herzustellenden Laminats und insbesondere bevorzugt im Bereich von 4 bis 10 % größer auf als die mindestens eine weitere Schicht des herzustellenden Laminats.

In Schritt b) wird eine erste Platte aus mindestens einem ersten Metall erwärmt. Die erste Platte besteht aus dem mindestens einen ersten Metall. Das Erwärmen der ersten Platte kann nach allen dem Fachmann bekannten Methoden erfolgen. Bevorzugt wird die erste Platte in Schritt b) induktiv erwärmt.

Gegenstand der vorliegenden Erfindung ist daher auch ein Verfahren, bei dem das Erwärmen der ersten Platte in Schritt b) induktiv erfolgt.

Die erste Platte kann in Schritt b) auf eine beliebige Temperatur erwärmt werden. Bevorzugt wird die erste Platte in Schritt b) auf eine Temperatur erwärmt, die oberhalb der Schmelztemperatur (T_{M(C)}) und unterhalb der Zersetzungstemperatur des in der Polyamidzusammensetzung (PZ) enthaltenen Copolyamids liegt.

Bevorzugt wird die erste Platte in Schritt b) auf eine Temperatur im Bereich von 150 bis 350 °C erwärmt, besonders bevorzugt im Bereich von 210 bis 280 °C und insbesondere bevorzugt im Bereich von 220 bis 250 °C.

Gegenstand der vorliegenden Erfindung ist daher auch ein Verfahren, bei dem die erste Platte in Schritt b) auf eine Temperatur im Bereich von 150 bis 350 °C erwärmt wird.

In Schritt c) wird die erwärmte erste Platte aus Schritt b) mit der in Schritt a) bereitgestellten Folie unter Erhalt des Laminats verpresst. Dabei verbindet sich die Folie mit der ersten Platte. Die Dicke der Folie kann dabei abnehmen.

Verfahren zum Verpressen der erwärmten ersten Platte aus Schritt b) mit der in Schritt a) bereitgestellten Folie in Schritt c) sind dem Fachmann als solche bekannt.

Die Schritte b) und c) können gleichzeitig oder nacheinander durchgeführt werden. Bevorzugt werden die Schritte b) und c) gleichzeitig durchgeführt. Dann wird die erste Platte erwärmt während sie mit der in Schritt a) bereitgestellten Folie verpresst wird.

Das in Schritt c) erhaltene Laminat wird üblicherweise abgekühlt. Das Abkühlen kann nach allen dem Fachmann bekannten Verfahren erfolgen, beispielsweise durch Einblasen von Druckluft auf das Laminat. Bevorzugt wird das Laminat abgekühlt während der Druck des Verpressens aufrechterhalten wird.

In dem erhaltenen Laminat ist die erwärmte erste Platte die erste Schicht aus mindestens einem ersten Metall und die Folie ist die mindestens eine weitere Schicht der Polyamidzusammensetzung (PZ).

Für den Fall, dass das Laminat mindestens eine zweite Schicht enthalten soll, wird ein zusätzlicher Schritt b1) durchgeführt, bei dem eine zweite Platte aus mindestens einem zweiten Metall erwärmt wird. Für das Erwärmen der zweiten Platte in Schritt b1) gelten die zuvor beschriebenen Ausführungen und Bevorzugungen für das Erwärmen der ersten Platte in Schritt b) entsprechend.

In Schritt c) wird dann die erwärmte erste Platte mit der erwärmten zweiten Platte aus Schritt b1) verpresst, während sich die in Schritt a) bereitgestellte Folie zwischen den beiden Platten befindet.

Weiterhin Gegenstand der vorliegenden Erfindung ist daher auch ein Verfahren zur Herstellung eines erfindungsgemäßen Laminats, das zusätzlich mindestens eine zweite Schicht mindestens eines zweiten Metalls umfasst und bei dem die mindestens eine erste Schicht mit der mindestens einen zweiten Schicht über die mindestens eine weitere Schicht verbunden ist, umfassend die Schritte:
a) Bereitstellen einer Folie aus einer Polyamidzusammensetzung (PZ), die ein Copolyamid hergestellt durch Polymerisation der Komponenten
   (A) Caprolactam,
   (B) mindestens eine C₄-C₄₀-Disäure und
   (C) mindestens ein C₄-C₂₀-Diamin
   enthält,
   wobei das Copolyamid eine Amidfunktionenkonzentration im Bereich von 3,5 bis 7 Amidgruppen / 1000 g/mol aufweist und
b) Erwärmen einer ersten Platte aus mindestens einem ersten Metall,
   b1) Erwärmen einer zweiten Platte aus mindestens einem zweiten Metall,
c) Positionieren der in Schritt a) bereitgestellten Folie zwischen der in Schritt b) erwärmten ersten Platte und der in Schritt b1) erwärmten zweiten Platte, und Verpressen der in Schritt b) erwärmten ersten Platte und der in Schritt b1) erwärmten zweiten Platte mit der in Schritt a) bereitgestellten Folie unter Erhalt des Laminats.

Für das mindestens eine zweite Metall der zweiten Platte in dem Verfahren gelten die zuvor beschriebenen Ausführungen und Bevorzugungen für das mindestens eine zweite Metall der mindestens einen zweiten Schicht entsprechend.

Für die zweite Platte sowie das Erwärmen der zweiten Platte gelten die zuvor beschriebenen Ausführungen und Bevorzugungen für die erste Platte und das Erwärmen der ersten Platte entsprechend.

Ebenso gelten für Schritt c), in dem zusätzlich die zweite Platte positioniert wird, die zuvor beschriebenen Ausführungen und Bevorzugungen für Schritt c) entsprechend.

Nachfolgend wird die vorliegende Erfindung anhand von Beispielen näher erläutert, ohne sie hierauf zu beschränken.

### Beispiele

### Es wurden die folgenden Komponenten eingesetzt

### Polyamid / Copolyamid

P1: Polyamid 6 (Ultramid B27E der BASF SE); Amidfunktionenkonzentration: 8,85 / 1000 g/mol
P2: Polyamid 6.6 (Ultramid A27 der BASF SE); Amidfunktionenkonzentration: 8,85 / 1000 g/mol
P3: Polyamid 6/66/13.6 (Ultramid 1C der BASF SE); Amidfunktionenkonzentration 9,1 / 1000 g/mol
P4: Polyamid 6.36; Amidfunktionenkonzentration: 3,10 / 1000 g/mol
P5: Polyamid 6.10 (Ultramid S der BASF SE); Amidfunktionenkonzentration: 7,09 / 1000 g/mol
C1: Polyamid 6/6.36 mit 30 Gew.-% Polyamid 6.36-Baueinheiten; Herstellung wie unten beschrieben; Amidfunktionenkonzentration: 5,68 / 1000 g/mol
C2: Polyamid 6/6.36 mit 40 Gew.- % Polyamid 6.36-Baueinheiten, Herstellung wie unten beschrieben; Amidfunktionenkonzentration: 5,08 / 1000 g/mol
C3: Polyamid 6/6.6 (Ultramid C31 der BASF SE); Amidfunktionenkonzentration: 8,85 / 1000 g/mol

### Weiteres Polymer

wP1: Lupolen KR1270 der BASF SE
wP2: EP-MSA (Ethylen/propylen/MSA Copolymer)
wP3: EO-MSA (Ethylen/octylen/MSA Copolymer)
wP4: Lupolen KR1270 der BASF SE
wP5: EBS (Ethylen-bis-stereamid)

### erstes und zweites Metall

### Stahl: HX260LADZ100MBO Platte

### Herstellung von Polyamid 6/6.36

Zur Herstellung von Polyamid 6/6.36 wurden Caprolactam, C₃₆-Dimersäure (hydriert, Pripol 1009 der Firma Croda), 85 gew.-prozentige Hexamethylendiaminlösung in Wasser, und Wasser zunächst mit Stickstoff, überlagert und bei Überdruck und einer Temperatur von 270 °C für sieben Stunden geführt und anschließend wurde für weitere vier Stunden unter Vakuum Wasser abdestilliert. Das erhaltene Polyamid wurde abgelassen, extrudiert und granuliert und anschließend mit heißem Wasser extrahiert und schließlich getrocknet. Die Ausgangsverbindungen wurden in solchen Mengen eingesetzt, dass das erhaltene Polyamid 30 Gew.-% bzw. 40 Gew.-% Polyamid 6/6.36-Einheiten enthielt.

### Herstellung der Polyamidzusammensetzung

Die in Tabelle 1 angegebenen Polymere wurden in den in Tabelle 1 angegebenen Mengen in einem Haake Extruder CTW100 bei 250 °C compoundiert und mit einem Durchsatz von 2 kg/h durch eine Runddüse mit einem Durchmesser von 3 mm extrudiert unter Erhalt von Granulat der Polyamidzusammensetzung. Die in Tabelle 1 angegebenen Mengen sind jeweils in Gew.-%.

**Tabelle 1**

| | P1 | P2 | P3 | P4 | P5 | C1 | C2 | C3 | wP1 | wP2 | wP3 | wP4 | wP5 |
|---|---|---|---|---|---|---|---|---|---|---|---|---|---|
| PZ1 | 100 | | | | | | | | | | | | |
| PZ2 | | 100 | | | | | | | | | | | |
| PZ3 | | | 100 | | | | | | | | | | |
| PZ4 | 70 | | | | | | | | 30 | | | | |
| PZ5 | 87,5 | | | | | | | | | 12 | | | 0,5 |
| PZ6 | 80 | | | | | | | | | | | 20 | |
| PZ7 | 90 | | 10 | | | | | | | | | | |
| PZ8 | | | | | | 100 | | | | | | | |
| PZ9 | | | | | | | 100 | | | | | | |
| PZ10 | | | | | | 90 | | | | | | 10 | |
| PZ11 | | | | | | | | 100 | | | | | |
| PZ12 | | | | | | | | 70 | | | | 30 | |
| PZ13 | | | | | | 85 | | | | | | | |
| PZ14 | | | | | | 77,5 | | | | | | | |

### Herstellung der Folien der Polyamidzusammensetzung

Zur Herstellung der Folien der Polyamidzusammensetzung wurde das Granulat der Polyamidzusammensetzung wie es vorstehend beschrieben erhalten wurde bei 215 bis 235 °C in einem Haake Extruder CTW100 mit einem Durchsatz von 0,5 bis 1,0 kg/h extrudiert durch eine Schlitzdüse mit einer Breite von 100 mm, wobei Folien der Polyamidzusammensetzung mit einer Dicke von 200 µm erhalten wurden.

### Herstellung von Laminaten

Vor der Herstellung wurden sowohl die Folien der Polyamidzusammensetzung als auch des die erste Platte und die zweite Platte des Stahls für 7 Tage bei 80 °C gelagert. Sowohl die Folien als auch der Stahl wurden im Bereich der Fügeflächen vor der Herstellung von Laminaten mit n-Heptan gereinigt.

Zur Herstellung des Laminats wurden eine erste Platte des Stahls und eine zweite Platte des Stahls in eine Vorrichtung eingelegt. Zwischen die erste Platte und die zweite Platte wurde eine Folie der Polyamidzusammensetzung eingelegt. Die Platten werden mit einer Schließkraft von 6 kg zusammengepresst, so dass eine Dicke der Folie von 0,1 mm nach dem Erwärmen erzielt wird.

Durch induktive Erwärmung während des Verpressens wurden die erste und die zweite Platte jeweils innerhalb von 3 s auf eine Temperatur von 240 °C erwärmt und bei dieser Temperatur für weitere 7 s gehalten unter Erhalt des Laminats. Anschließend wurde das Laminat für 20 s mit Druckluft abgekühlt und während des weiteren Abkühlens auf Raumtemperatur die Kraft des Verpressens abgelassen.

Die erhaltenen Laminate wurden der folgenden Zugscherprüfung in Anlehnung an DIN 1465 direkt nach Herstellung und nach Lagerung für 14 Tage bei 70 °C und 62 % relativer Luftfeuchtigkeit unterzogen; es wurden jeweils fünf Proben geprüft:
i) Lagerung der Proben für 1 Stunde bei Raumtemperatur (25 °C)
ii) Einspannen in eine Prüfmaschine Instron 10KN/Instron 150KN mit Probenschutz und Ziehen bis zum Bruch mit einer Prüfgeschwindigkeit von 10 mm/min. Anhand der Maximalkraft wird bezogen auf die Fügefläche die Zugscherspannunng nach dem Fachmann bekannten Methoden ermittelt
iii) Die Fügeteile werden aus der Halterung entnommen und das Bruchbild dokumentiert.

Der Wassergehalt nach Lagerung für 14 Tage bei 70 °C und 62 % Luftfeuchtigkeit wurde gravimetrisch bestimmt.

Die Ergebnisse der Messungen sind in Tabelle 2 zusammengefasst.

**Tabelle 2**

| Beispiel | Polyamidzusammensetzung | Wasser [Gew.%] | ΔH2 [J/g] | Tₘ [°C] | Zugfestigkeit vor Lagerung [MPa] | Zugfestigkeit nach Lagerung [MPa] |
|---|---|---|---|---|---|---|
| V1 | PZ1 | 3,32 | 73 | 219 | 6,04 | 0 |
| V2 | PZ2 | | 99 | 261 | 8,8 | 0 |
| V3 | PZ3 | | - | 185 | 14,2 | 7,13 |
| V4 | PZ4 | 2,47 | 47,8 | | 13,66 | 0 |
| V5 | PZ5 | | 45 | 220 | 7,20 | Relaminierung während Konditionierung |
| V6 | PZ6 | | 38 | 220 | 7,01 | Relaminierung während Konditionierung |
| V7 | PZ7 | | 63 | 222 | 6,70 | 9,25 |
| B8 | PZ8 | | 47 | 191/200 | 9,1 | 6,05 |
| B9 | PZ9 | | 37 | 180 | 14,15 | 10,9 |
| B10 | PZ10 | | 28 | 198,5 | 9,36 | 6,13 |
| V11 | PZ11 | | 50 | 182/195 | 9,43 | |
| V12 | PZ12 | 2,70 | 26 | 197 | 4,9 | Relaminierung während Konditionierung |
| B13 | PZ13 | | 29 | 199 | 13,8 | 9,58 |
| B14 | PZ14 | | 25,5 | 198 | 12,6 | 6,11 |

## Patentansprüche

1. Laminat umfassend mindestens eine erste Schicht mindestens eines ersten Metalls und mindestens eine weitere Schicht einer Polyamidzusammensetzung (PZ), **dadurch gekennzeichnet, dass** die Polyamidzusammensetzung (PZ) ein Copolyamid hergestellt durch Polymerisation der Komponenten
(A) Caprolactam,
(B) mindestens eine C₄-C₄₀-Disäure und
(C) mindestens ein C₄-C₂₀-Diamin,
enthält, wobei das Copolyamid eine Amidfunktionenkonzentration im Bereich von 3,5 bis 7 Amidgruppen / 1000 g/mol aufweist.

2. Laminat gemäß Anspruch 1, **dadurch gekennzeichnet, dass** das Laminat zusätzlich mindestens eine zweite Schicht mindestens eines zweiten Metalls umfasst und dass die mindestens eine erste Schicht mit der mindestens einen zweiten Schicht über die mindestens eine weitere Schicht verbunden ist.

3. Laminat gemäß Anspruch 1 oder 2, **dadurch gekennzeichnet, dass** das Copolyamid hergestellt ist durch Polymerisation von 20 bis 80 Gew.-% der Komponente (A) bezogen auf die Summe der Gew.-% der Komponenten (A), (B) und (C).

4. Laminat gemäß einem der Ansprüche 1 bis 3, **dadurch gekennzeichnet, dass** die Polyamidzusammensetzung (PZ) eine Schmelzenthalpie ΔH2_{(PZ)} im Bereich von 20 bis 60 J/g aufweist.

5. Laminat gemäß einem der Ansprüche 1 bis 4, **dadurch gekennzeichnet, dass** das Copolyamid eine Schmelztemperatur (T_{M(C)}), die im Bereich von 180 bis 215 °C liegt, aufweist.

6. Laminat gemäß einem der Ansprüche 1 bis 5, **dadurch gekennzeichnet, dass** das Copolyamid eine Amidfunktionenkonzentration im Bereich von 4 bis 6,5 Amidgruppen / 1000 g/mol aufweist.

7. Laminat gemäß einem der Ansprüche 1 bis 6, **dadurch gekennzeichnet, dass** die Polyamidzusammensetzung (PZ) zusätzlich mindestens ein weiteres Polymer ausgewählt aus der Gruppe bestehend aus Polyethylen und Copolymeren aus zumindest zwei Monomeren, ausgewählt aus der Gruppe bestehend aus Ethylen, Isobutylen, Propylen, Octen, Alkylacrylat, Alkylmethacrylat, Acrylsäure und Maleinsäureanhydrid, enthält.

8. Laminat gemäß einem der Ansprüche 1 bis 7, **dadurch gekennzeichnet, dass** die Polyamidzusammensetzung (PZ) zusätzlich mindestens einen Füllstoff ausgewählt aus der Gruppe bestehend aus anorganischen Füllstoffen, organischen Füllstoffen und Naturfüllstoffen enthält.

9. Laminat gemäß einem der Ansprüche 1 bis 8, **dadurch gekennzeichnet, dass** das mindestens eine erste Metall ausgewählt ist aus der Gruppe bestehend aus Eisen, Aluminium, Kupfer, Nickel und Magnesium sowie Legierungen daraus.

10. Laminat gemäß einem der Ansprüche 1 bis 9, **dadurch gekennzeichnet, dass** die mindestens eine erste Schicht eine Dicke im Bereich von 0,1 mm bis 0,6 mm aufweist und/oder dass die mindestens eine weitere Schicht eine Dicke im Bereich von 0,02 bis 1,5 mm aufweist.

11. Laminat gemäß einem der Ansprüche 1 bis 10, **dadurch gekennzeichnet, dass** die Polyamidzusammensetzung (PZ) zusätzlich mindestens ein Additiv ausgewählt aus der Gruppe bestehend aus Stabilisatoren, Farbstoffen, Antistatika, Füllölen, Oberflächenverbesserern, Sikkativen, Entformungshilfsmitteln, Trennmitteln, Antioxidantien, Lichtstabilisatoren, PVC-Stabilisatoren, Gleitmitteln, Flammschutzmitteln, Treibmitteln, Schlagzähmodifikatoren, Haftvermittlern, Kopplungsmitteln und Nukleierungshilfsmitteln enthält.

12. Verfahren zur Herstellung eines Laminats gemäß einem der Ansprüche 1 bis 11 umfassend die Schritte
a) Bereitstellen einer Folie aus einer Polyamidzusammensetzung (PZ), die ein Copolyamid hergestellt durch Polymerisation der Komponenten
(A) Caprolactam,
(B) mindestens eine C₄-C₄₀-Disäure und
(C) mindestens ein C₄-C₂₀-Diamin,
enthält, wobei das Copolyamid eine Amidfunktionenkonzentration im Bereich von 3,5 bis 7 Amidgruppen / 1000 g/mol aufweist,
b) Erwärmen einer ersten Platte aus mindestens einem ersten Metall,
c) Verpressen der erwärmten ersten Platte aus Schritt b) mit der in Schritt a) bereitgestellten Folie unter Erhalt des Laminats.

13. Verfahren gemäß Anspruch 12, **dadurch gekennzeichnet, dass** die erste Platte in Schritt b) auf eine Temperatur im Bereich von 150 bis 350 °C erwärmt wird.

14. Verfahren gemäß Anspruch 12 oder 13, **dadurch gekennzeichnet, dass** das Erwärmen der ersten Platte in Schritt b) induktiv erfolgt.

15. Verfahren gemäß einem der Ansprüche 12 bis 14, **dadurch gekennzeichnet, dass** die Folie in Schritt a) durch ein Extrusionsverfahren bereitgestellt wird.

## Claims

1. A laminate comprising at least one first layer of at least one first metal and at least one further layer of a polyamide composition (PC), wherein the polyamide composition (PC) comprises a copolyamide produced by polymerization of the components
(A) caprolactam,
(B) at least one C₄-C₄₀-diacid and
(C) at least one C₄-C₂₀-diamine,
wherein the copolyamide has an amide function concentration in the range from 3.5 to 7 amide groups / 1000 g/mol.

2. The laminate according to claim 1, wherein the laminate further comprises at least one second layer of at least one second metal and wherein the at least one first layer is joined to the at least one second layer via the at least one further layer.

3. The laminate according to claim 1 or 2, wherein the copolyamide is produced by polymerization of 20% to 80% by weight of the component (A) based on the sum of the % by weight of the components (A), (B) and (C).

4. The laminate according to any of claims 1 to 3, wherein the polyamide composition (PC) has a melting enthalpy ΔH2_{(PC)} in the range from 20 to 60 J/g.

5. The laminate according to any of claims 1 to 4, wherein the copolyamide has a melting temperature (T_{M(C)}) in the range from 180°C to 215°C.

6. The laminate according to any of claims 1 to 5, wherein the copolyamide has an amide function concentration in the range from 4 to 6.5 amide groups / 1000 g/mol.

7. The laminate according to any of claims 1 to 6, wherein the polyamide composition (PC) further comprises at least one further polymer selected from the group consisting of polyethylene and copolymers of at least two monomers selected from the group consisting of ethylene, isobutylene, propylene, octene, alkyl acrylate, alkyl methacrylate, acrylic acid and maleic anhydride.

8. The laminate according to any of claims 1 to 7, wherein the polyamide composition (PC) further comprises at least one filler selected from the group consisting of inorganic fillers, organic fillers and natural fillers.

9. The laminate according to any of claims 1 to 8, wherein the at least one first metal is selected from the group consisting of iron, aluminum, copper, nickel and magnesium and also alloys thereof.

10. The laminate according to any of claims 1 to 9, wherein the at least one first layer has a thickness in the range from 0.1 mm to 0.6 mm and/or wherein the at least one further layer has a thickness in the range from 0.02 mm to 1.5 mm.

11. The laminate according to any of claims 1 to 10, wherein the polyamide composition (PC) further comprises at least one additive selected from the group consisting of stabilizers, dyes, antistats, filler oils, surface improvers, siccatives, demolding agents, release agents, antioxidants, light stabilizers, PVC stabilizers, lubricants, flame retardants, blowing agents, impact modifiers, adhesion promoters, coupling agents and nucleating agents.

12. A process for producing a laminate according to any of claims 1 to 11 comprising the steps of
a) providing a film of a polyamide composition (PC) which comprises a copolyamide produced by polymerization of the components
(A) caprolactam,
(B) at least one C₄-C₄₀-diacid and
(C) at least one C₄-C₂₀-diamine,
wherein the copolyamide has an amide function concentration in the range from 3.5 to 7 amide groups / 1000 g/mol,
b) heating a first sheet of at least one first metal,
c) pressing the heated first sheet from step b) with the film provided in step a) to obtain the laminate.

13. The process according to claim 12, wherein step b) comprises heating the first sheet to a temperature in the range from 150°C to 350°C.

14. The process according to claim 12 or 13, wherein the heating of the first sheet in step b) is effected by inductive means.

15. The process according to any of claims 12 to 14, wherein step a) comprises providing the film by an extrusion process.

## Revendications

1. Stratifié comprenant au moins une première couche d'au moins un premier métal et au moins une couche supplémentaire d'une composition de polyamide (PZ), **caractérisé en ce que** la composition de polyamide (PZ) contient un copolyamide fabriqué par polymérisation des composants :
(A) du caprolactame,
(B) au moins un diacide en C₄-C₄₀ et
(C) au moins une diamine en C₄-C₂₀,
le copolyamide présentant une concentration en fonctions amide dans la plage allant de 3,5 à 7 groupes amide/1 000 g/mol.

2. Stratifié selon la revendication 1, **caractérisé en ce que** le stratifié comprend en outre au moins une deuxième couche d'au moins un deuxième métal et **en ce que** ladite au moins une première couche est reliée avec ladite au moins une deuxième couche par l'intermédiaire de ladite au moins une couche supplémentaire.

3. Stratifié selon la revendication 1 ou 2, **caractérisé en ce que** le copolyamide est fabriqué par polymérisation de 20 à 80 % en poids du composant (A), par rapport à la somme des % en poids des composants (A), (B) et (C).

4. Stratifié selon l'une quelconque des revendications 1 à 3, **caractérisé en ce que** la composition de polyamide (PZ) présente une enthalpie de fusion Δ H2_{(PZ)} dans la plage allant de 20 à 60 J/g.

5. Stratifié selon l'une quelconque des revendications 1 à 4, **caractérisé en ce que** le copolyamide présente une température de fusion (T_{M(C)}) qui se situe dans la plage allant de 180 à 215 °C.

6. Stratifié selon l'une quelconque des revendications 1 à 5, **caractérisé en ce que** le copolyamide présente une concentration en fonctions amide dans la plage allant de 4 à 6,5 groupes amide/1 000 g/mol.

7. Stratifié selon l'une quelconque des revendications 1 à 6, **caractérisé en ce que** la composition de polyamide (PZ) contient en outre au moins un polymère supplémentaire choisi dans le groupe constitué par le polyéthylène et les copolymères d'au moins deux monomères, choisis dans le groupe constitué par l'éthylène, l'isobutylène, le propylène, l'octène, l'acrylate d'alkyle, le méthacrylate d'alkyle, l'acide acrylique et l'anhydride de l'acide maléique.

8. Stratifié selon l'une quelconque des revendications 1 à 7, **caractérisé en ce que** la composition de polyamide (PZ) contient en outre au moins une charge choisie dans le groupe constitué par les charges inorganiques, les charges organiques et les charges naturelles.

9. Stratifié selon l'une quelconque des revendications 1 à 8, **caractérisé en ce que** ledit au moins un premier métal est choisi dans le groupe constitué par le fer, l'aluminium, le cuivre, le nickel et le magnésium, ainsi que les alliages de ceux-ci.

10. Stratifié selon l'une quelconque des revendications 1 à 9, **caractérisé en ce que** ladite au moins une première couche présente une épaisseur dans la plage allant de 0,1 mm à 0,6 mm et/ou **en ce que** ladite au moins une couche supplémentaire présente une épaisseur dans la plage allant de 0,02 à 1,5 mm.

11. Stratifié selon l'une quelconque des revendications 1 à 10, **caractérisé en ce que** la composition de polyamide (PZ) contient en outre au moins un additif choisi dans le groupe constitué par les stabilisateurs, les colorants, les antistatiques, les huiles de remplissage, les agents d'amélioration de surfaces, les siccatifs, les adjuvants de démoulage, les agents de séparation, les antioxydants, les photostabilisateurs, les stabilisateurs de PVC, les lubrifiants, les agents ignifuges, les agents gonflants, les modificateurs de la résistance aux impacts, les promoteurs d'adhésion, les agents de couplage et les adjuvants de nucléation.

12. Procédé de fabrication d'un stratifié selon l'une quelconque des revendications 1 à 11, comprenant les étapes suivantes :
a) la préparation d'une feuille en une composition de polyamide (PZ), qui contient un copolyamide fabriqué par polymérisation des composants :
(A) du caprolactame,
(B) au moins un diacide en C₄-C₄₀ et
(C) au moins une diamine en C₄-C₂₀,
le copolyamide présentant une concentration en fonctions amide dans la plage allant de 3,5 à 7 groupes amide/1 000 g/mol,
b) le chauffage d'une première plaque en au moins un premier métal,
c) la compression de la première plaque chauffée de l'étape b) avec la feuille préparée dans l'étape a) avec obtention du stratifié.

13. Procédé selon la revendication 12, **caractérisé en ce que** la première plaque est portée à une température dans la plage allant de 150 à 350 °C dans l'étape b).

14. Procédé selon la revendication 12 ou 13, **caractérisé en ce que** le chauffage de la première plaque dans l'étape b) a lieu par induction.

15. Procédé selon l'une quelconque des revendications 12 à 14, **caractérisé en ce que** la feuille est fabriquée par un procédé d'extrusion dans l'étape a).
